# EUROPEAN PATENT SPECIFICATION

(11) **EP 3 693 560 B1**
(45) Date of publication and mention of the grant of the patent: **22.11.2023**
(21) Application number: 20155727.9
(22) Date of filing: 05.02.2020
(51) Int. Cl.: F01D 25/02

(54) **ELECTRICALLY HEATED AIR FILTER FOR AN INTAKE SYSTEM OF AN ENGINE OF A VEHICLE AND CORRESPONDING MANUFACTURING METHOD**
ELEKTRISCH BEHEIZTER LUFTFILTER FÜR DAS EINLAUFSYSTEM EINES FAHRZEUGTRIEBWERKS SOWIE KORRESPONDIERENDE FERTIGUNGSMETHODE
FILTRE À AIR CHAUFFÉ ÉLECTRIQUEMENT D'UN SYSTÈME D'ENTRÉE D'UN VÉHICULE ET MÉTHODE DE PRODUCTION CORRESPONDANTE

(30) Priority: 05.02.2019 IT 201900001653
(43) Date of publication of application: 12.08.2020
(73) Proprietor: BMC S.R.L., 40059 Medicina (IT)
(72) Inventor: BERGAMI, Gaetano, 40059 MEDICINA (BO) (IT)
(74) Representative: Studio Torta S.p.A.

(56) References cited:
- WO-A1-2018/073804
- GB-A- 2 380 255

## Description

### CROSS-REFERENCE TO RELATED APPLICATIONS

This patent application claims priority from Italian patent application no. 102019000001653 filed on 05/02/2019.

### TECHNICAL FIELD

This invention relates to an electrically heated air filter for an intake system of an engine of a vehicle and a corresponding manufacturing method.

The present invention can advantageously be applied to an aircraft (i.e., a man-made machine that is able to fly by gaining support from the air to transport persons or objects within the Earth's atmosphere) and in particular to a helicopter, to which the following discussion explicitly refers without any loss of generality.

### PRIOR ART

Modern helicopters are usually provided with at least one turbine engine that drives a rotor blade system that allows said helicopter to take off and land vertically, to hover and to fly laterally, backwards and forwards. The turbine engine has an air intake at the front, through which the turbine engine takes in the external air needed for it to operate (i.e., the external air containing the oxygen needed for combustion).

Generally speaking, the air intake may comprise a metal grid with a relatively large mesh size (in the region of one or two centimetres) the purpose of which is to prevent birds from getting in. Between the air intake and the turbine engine there may be an air filter with the function of filtering the intake air, so as to hold back small impurities (dust and the like) that could, in the long term, lead to premature wear of the turbine engine.

The air filter can only be used when the ambient temperature is (adequately) above zero (on the ground and in the air), because the filtering material is usually hygroscopic and so tends to absorb moisture from the air: when the temperature falls to below zero the moisture in the filtering material freezes to form ice that creates a (more or less extensive) barrier through which the air is unable to enter (but the same problem would also arise with a non-hygroscopic filtering material owing to the surface moisture that forms on the outside surfaces of the filtering material or owing to the snow that could settle on the outer surface of the filtering material). As a consequence, when the ambient temperature is close to or below zero the air filter cannot be used (in particular it is bypassed by opening one or more bypass ducts arranged parallel to the air filter). Alternatively, researchers have proposed equipping the air filter with a heater device that is designed to always keep the temperature of the filtering material at a temperature (adequately) above zero.

The patent applications WO2018073804A1 and WO2018073806A1 represent the closest state of the art and describe a helicopter equipped, on intake, with an air filter provided with an electric heater device, which is electrically connected to a group of electrified wires of an outer reinforcement mesh of the air filter, and is designed to make an electric current flow through the electrified wires to generate, due to the Joule effect, heat inside the outer reinforcement mesh. In particular, the electric heater device is made by externally covering the warp (weft) wires of the outer reinforcement mesh by means of an external insulation of electrically insulating material, resting two successions of collectors, which are electrically insulated from one another, against the opposite ends of the outer reinforcement mesh and at the ends of the warp (weft) wires, welding each collector to the ends of the warp (weft) wires, resting the outer reinforcement mesh on top of a filtering material panel, bending the unit consisting of the filtering material panel enclosed between the outer reinforcement mesh and an inner reinforcement mesh in waves, and, finally, coupling the wave-shaped unit, consisting of the filtering material panel enclosed between the reinforcement mesh, to a perimeter frame.

It has been observed that the manufacture of the electric heater device requires great precision in all the operations and, in particular, in the bending of the unit, consisting of the filtering material panel enclosed between the reinforcement meshes, in waves. This is to avoid bringing two adjacent collectors into reciprocal contact and thus causing a short circuit between the two collectors and, therefore, preventing the electric current from flowing in the portion of the inner reinforcement mesh between the two short-circuited collectors.

### DESCRIPTION OF THE INVENTION

The purpose of this invention is to provide an electrically heated air filter for an intake system of an engine of a vehicle and a corresponding manufacturing method, which will reduce the risk of short circuits between adjacent collectors and, at the same time, be easy and economical to manufacture.

According to this invention, an electrically heated air filter is provided for an intake system of a vehicle engine and a corresponding manufacturing method, as claimed in the attached claims.

The claims describe preferred embodiments of the present invention, forming an integral part of this disclosure.

### BRIEF DESCRIPTION OF THE DRAWINGS

This invention will now be described with reference to the accompanying drawings, which illustrate a non-limiting embodiment thereof, wherein:
- Figure 1 is a perspective schematic view of a helicopter built according to the present invention;
- Figure 2 is a schematic cross-sectional view of an air box provided with an air filter and through which the air needed to operate a turbine engine of the helicopter shown in Figure 1 is taken in;
- Figure 3 shows a plan view of the air filter;
- Figure 4 shows a cross-sectional view along the line IV-IV of the air filter;
- Figure 5 shows an exploded cross-sectional view along the line IV-IV of the air filter;
- Figure 6 is an enlarged scale view of a detail of Figures 4 and 5;
- Figure 7 is an enlarged scale view of a variant of the detail in Figure 6;
- Figures 8 and 9 are schematic views of electrical connections of an electric heating device applied to an outer reinforcement mesh of the air filter in Figure 2;

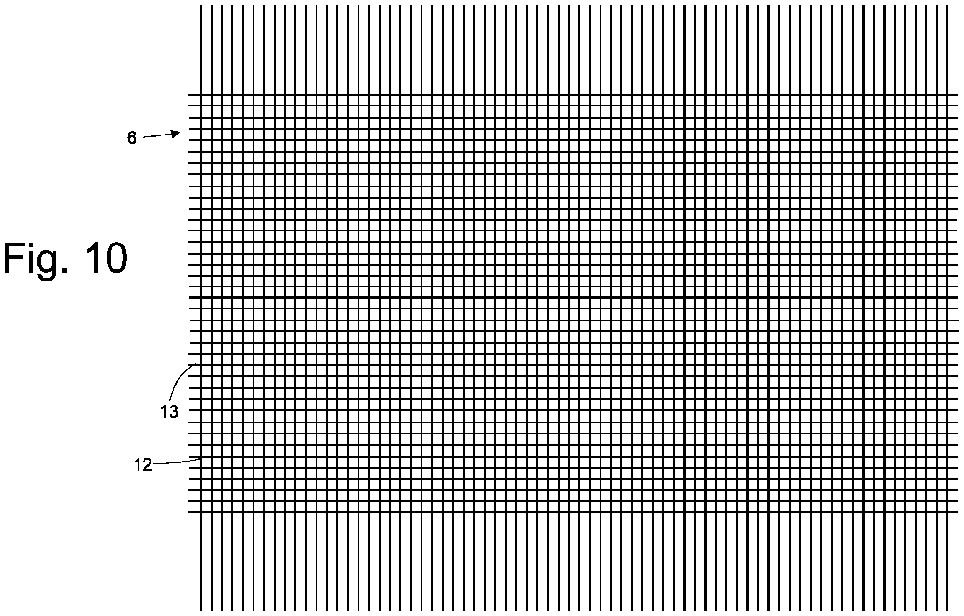

- Figure 10 is a view of an outer reinforcement mesh of the air filter in Figure 2 before it is coupled to an electric heating device;
- Figures 11, 12, and 13 are a top view, a side view, and a bottom view, respectively, of a support element provided with collectors of an electric heating device; and
- Figure 14 is an enlarged scale view of an additional variant of the detail in Figures 6 and 7.

### PREFERRED EMBODIMENTS OF THE INVENTION

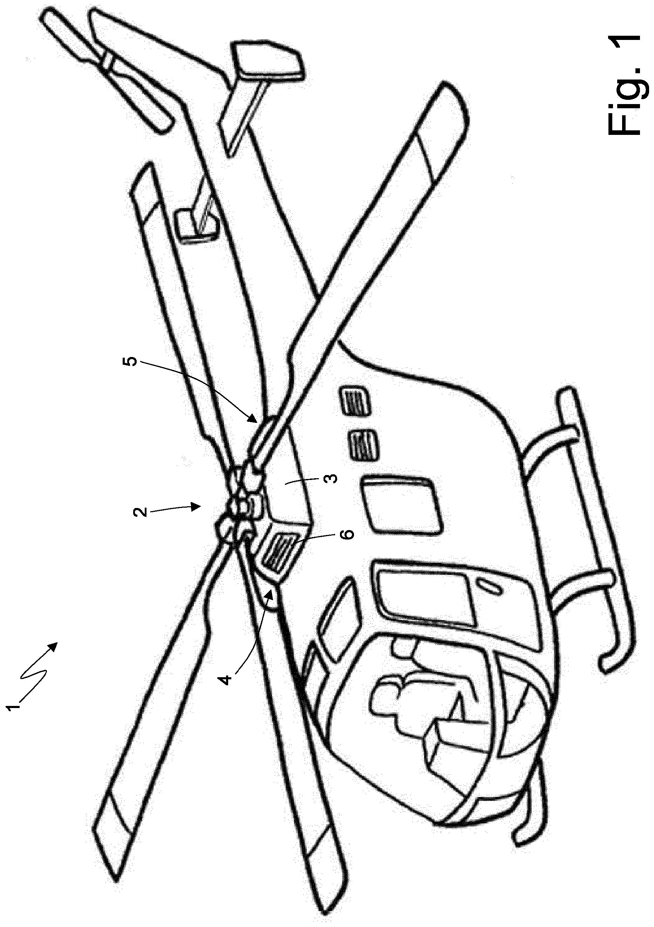

Figure 1 shows a helicopter, indicated as a whole with reference number 1, comprising a turbine engine 2 that drives a rotor blade system that enables said helicopter to take off and land vertically, to hover and to fly laterally, backwards and forwards.

The turbine engine 2 comprises a tubular housing 3 having, at the front, an air intake 4 (through which the turbine engine 2 takes in the external air needed for it to operate, i.e., the external air containing the oxygen needed for combustion) and, at the back, an air outlet 5 (through which the turbine engine 2 expels the exhaust gas produced by the combustion process). Near the air intake 4, there is a metal grid 6 with a relatively large mesh size (in the region of one or two centimetres) the function of which is to prevent birds from getting in.

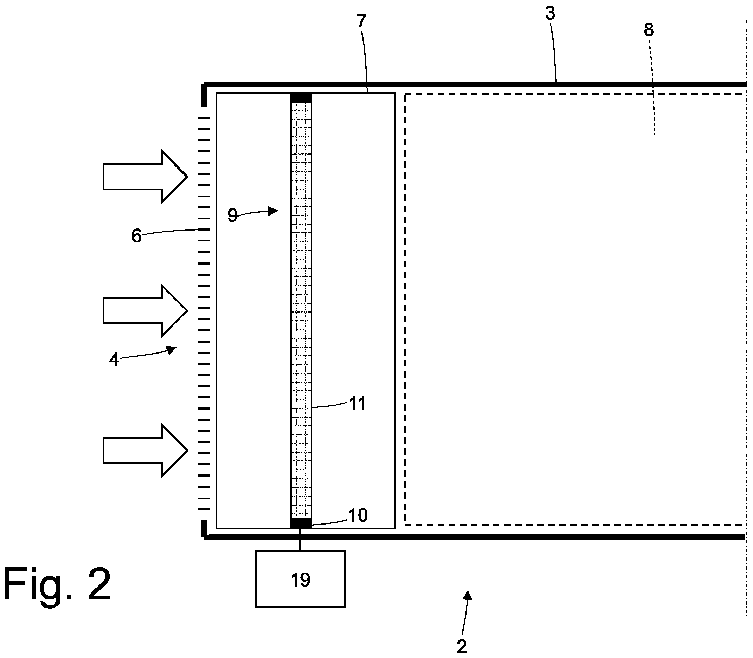

As illustrated in Figure 2, in the tubular housing 3 there is an air box 7 that has, on the inside, a cavity with an inlet opening coupled to the air intake 4 of the tubular housing 3 and an outlet opening coupled to an intake system 8 of the turbine engine 2 (fresh air is conveyed through the intake system 8 towards the moving parts of the turbine engine 2 in which fuel combustion takes place using the intake air as the combustion agent, i.e., towards the combustion chamber of the turbine engine 2). Inside the cavity of the air box 7 there is an air filter 9 which is interposed between the inlet opening and the outlet opening and thus divides the cavity into an intake chamber, which is arranged upstream of the air filter 9 and communicates with the external environment, and an outlet chamber, which is arranged downstream of the air filter 9 and communicates with the intake system of the turbine engine 2. The air filter 9 is arranged downstream of the air intake 4 and has the function of filtering the intake air in order to withhold small impurities (dust and the like) that could, in the long term, lead to premature wear of the turbine engine 2.

The air filter 9 comprises a peripheral frame 10 (made of aluminium, of plastic material or of a composite material) that supports a panel 11 of filtering material (for example consisting of a woven or non-woven fabric made of cotton or other fibres enclosed between two layers of a thin metal net which give shape and strength to said filtering material). It is important to observe that the shape of the air filter 9 as seen in a plan view may vary (for example round, rectangular, elliptical, triangular, trapezoidal, or a combination of these) depending on the shape of the tubular housing 2, i.e., depending on the shape of the air box 7 in which the air filter 9 is housed.

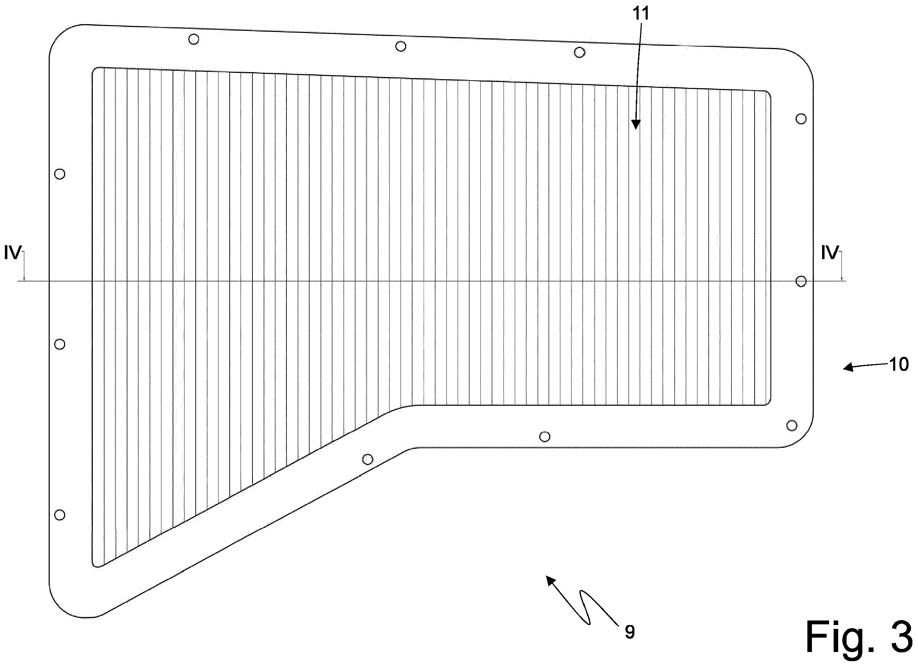

According to what is shown in Figures 3-6, the air filter 9 comprises the perimeter frame 10 (made of aluminium, plastic, or composite material) that supports the filtering material panel 11 that is pleated (i.e. bent on itself to form a succession of waves) and is, for example, made of woven or non-woven fabric made of cotton or other fibres. In other words, the filtering material panel 11 is wavy (i.e. shaped like waves) to increase the useful surface area of the filtering material so that it is equal to the outer dimensions.

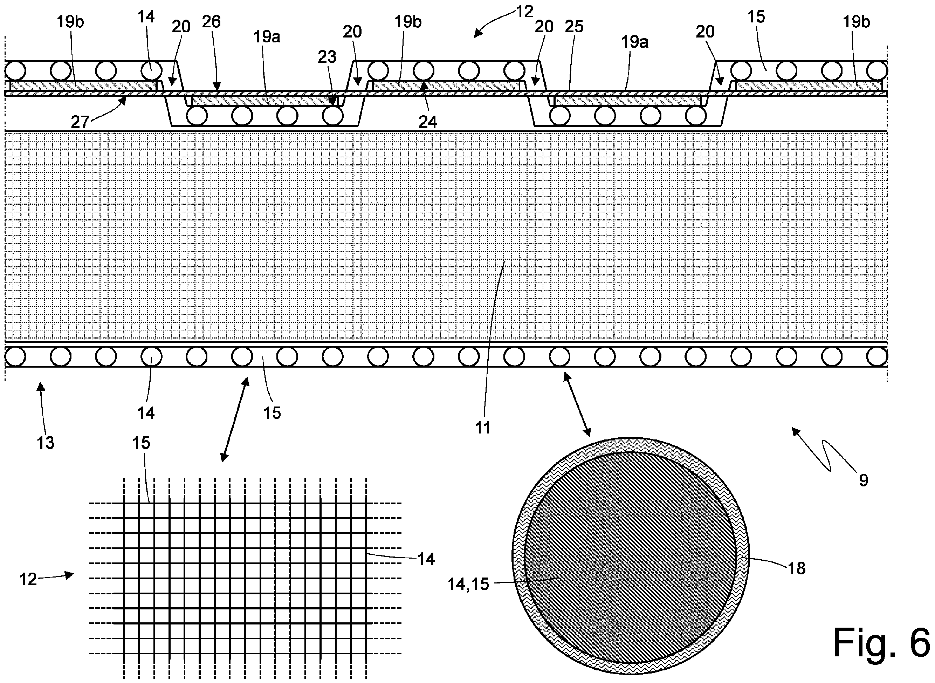

According to what is shown in Figure 6, the air filter 9 comprises a thin, pleated outer reinforcement mesh 12 and a thin, pleated inner reinforcement mesh 13 that rest against opposite surfaces of the filtering material panel 11 (i.e., enclosing the filtering material panel 11 between them) to give said filtering material panel 11 a stable shape and strength. In other words, the filtering material panel 11 is covered on both sides by the reinforcement meshes 12 and 13 (i.e., it is contained between the reinforcement meshes 12 and 13) that give said filtering material panel 11 a stable shape. It is important to observe that the reinforcement meshes 12 and 13 are sized both to give the panel 11 the required shape stability in order to withstand the air pressure without becoming deformed, even when the helicopter 1 travels at high speed with a strong headwind, and so that it does not constitute too big an obstacle to the air flow (i.e., so as not to produce an excessive loss of load in the intake air flowing through the air filter 9).

The outer reinforcement mesh 12 rests against an outer surface of the filtering material panel 11 through which the intake air enters to pass through said filtering material panel 11; the inner reinforcement mesh 13, instead, rests against an inner surface of the filtering material panel 11 which is opposite the outer surface. In other words, the outer reinforcement mesh 12 is arranged upstream of the filtering material panel 11 with respect to the intake air flow, whereas the inner reinforcement mesh 13 is arranged downstream of the filtering material panel 11 with respect to the intake air flow.

According to what is shown in Figure 6, both of the reinforcement meshes 12 and 13 are made up of a plurality of warp wires 14 (i.e., which make up the warp) and a plurality of weft wires 15 (i.e., which make up the weft); the warp wires 14 extend in a linear direction, whereas the weft wires 15 are fed through the shed of the warp wires 14 by *"winding"* them around said warp wires 14.

In other words, the weft wires 15 are interlaced with the warp wires 14 in such a way that the reinforcement meshes 12 and 13 are obtained by means of a weaving process (i.e., by interlacing the warp wires 14 with the weft wires 15). It is important to observe that the reinforcement meshes 12 and 13 have no welding spots (i.e., the wires 14 and 15 are not welded to each other) and are held together through the interlacing of the warp wires 14 with the weft wires 15 (i.e., they are held together by weaving the warp wires 14 with the weft wires 15).

According to a possible embodiment, once the reinforcement meshes 12 and 13 have been formed the reinforcement meshes 12 and 13 can be provided with a further coating made of enamel or paint which also has the function of joining the wires 14 and 15 to one another (i.e., the further coating made of enamel or paint is applied to the reinforcement meshes 12 and 13 after the weaving of said reinforcement meshes 12 and 13); in other words, the enamel or paint coating that covers the reinforcement meshes 12 and/or 13 establishes a mechanical coupling between the weft wires 14 and the warp wires 15 and thus contributes to holding the reinforcement mesh 12 and/or 13 together in the correct position. Clearly, the enamel or paint coating that covers the reinforcement mesh 12 and/or 13 also provides an additional protection for the wires 14 and 15. By way of example, the enamel or paint coating could be applied by dipping the reinforcement mesh 12 and/or 13 in an enamel or paint bath.

To manufacture the air filter 9, the reinforcement meshes 12 and 13 and the filtering material panel 11 are manufactured separately as flat pieces, then the reinforcement meshes 12 and 13 are placed on opposite surfaces of the filtering material panel 11 to form a unit (i.e., a *"sandwich"*) which is also flat and is then bent in waves to give said unit its final shape; lastly, said wave-shaped unit is coupled to the perimeter frame 10 (usually by means of glue and/or resin) which, in addition to giving the air filter 9 a stable shape, also has the function of holding together the unit formed by the reinforcement meshes 12 and 13 and the filtering material panel 11.

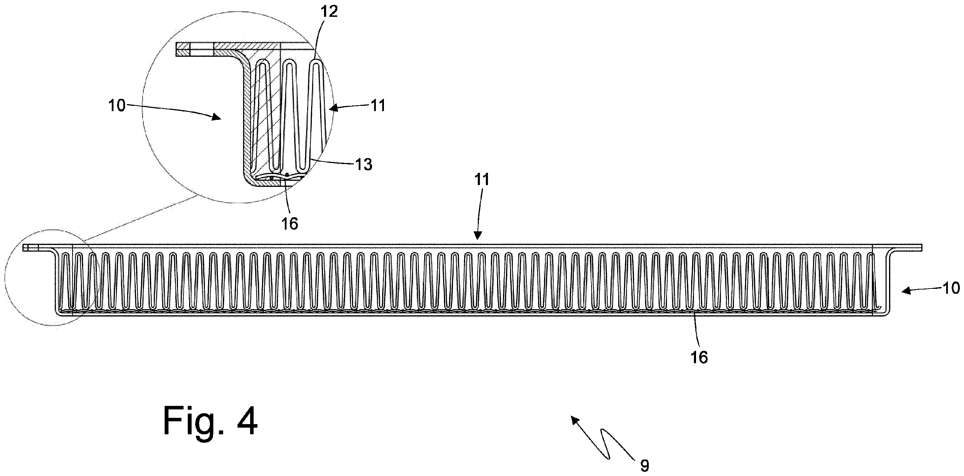

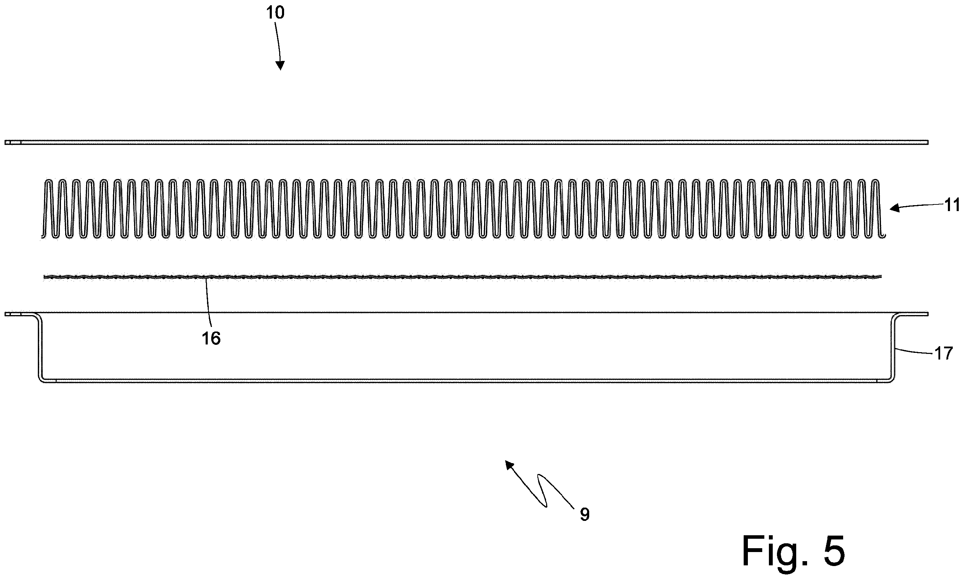

According to a possible (but by no means mandatory) embodiment illustrated in Figures 4 and 5, the air filter 9 further comprises a plane (flat) stiffening mesh 16 which is arranged internally and has the function of helping the wave-shaped filtering material panel 11 to withstand the stress caused by the pressure generated by the intake air, without being deformed; the function of the reinforcement stiffening mesh 16 is more important in the case of air filters 9 with a large surface.

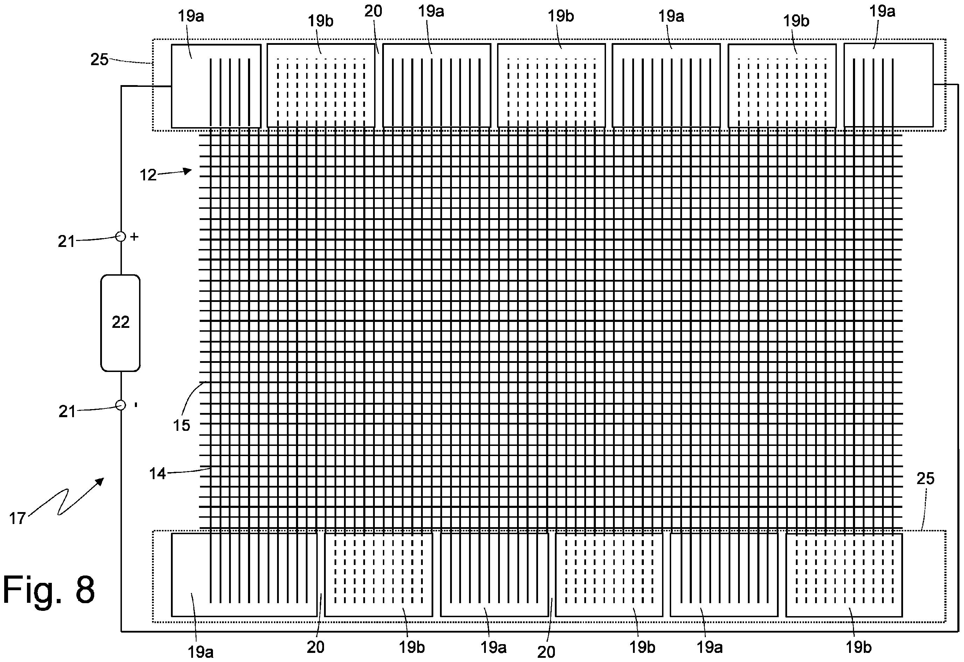

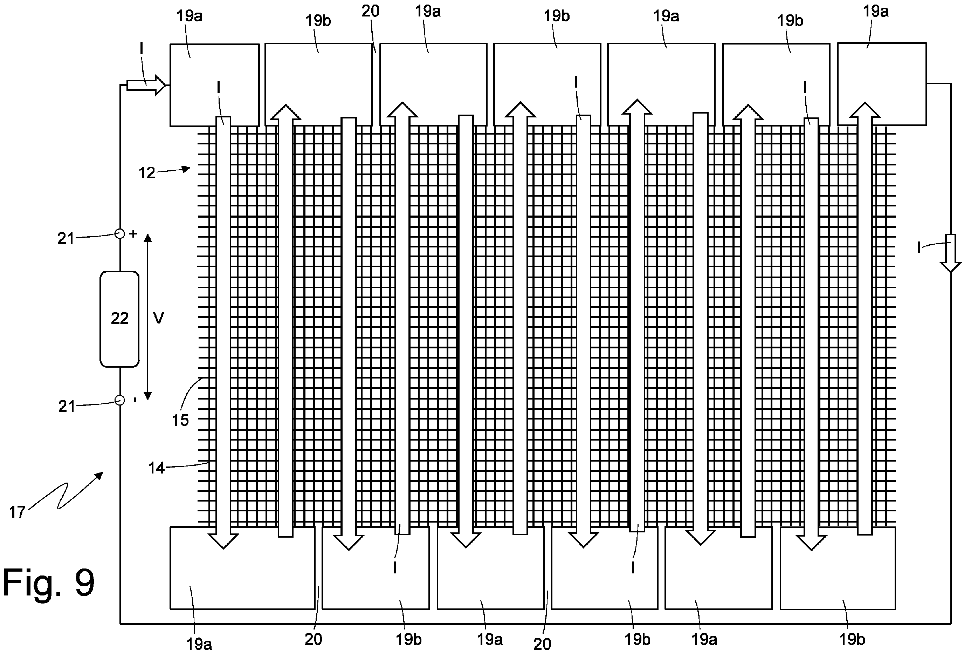

According to what is shown in Figures 8 and 9, the air filter 9 comprises an electric heating device 17 which is designed to heat the filtering material panel 11 (when necessary). In particular, the heating device 17 is designed to cause an electric current I to flow through part of the outer reinforcement mesh 12 so as to generate heat due to the Joule effect on the inside of said outer reinforcement mesh 12. The heat generated by the outer reinforcement mesh 12 is transmitted to the filtering material panel 11 both directly by heat conduction (in that the outer reinforcement mesh 12 rests against an outer surface of the filtering material panel 11), and indirectly by means of the intake air which warms up as it flows through the outer reinforcement mesh 12 and then releases heat to the filtering material panel 11 when it flows through said filtering material panel 11.

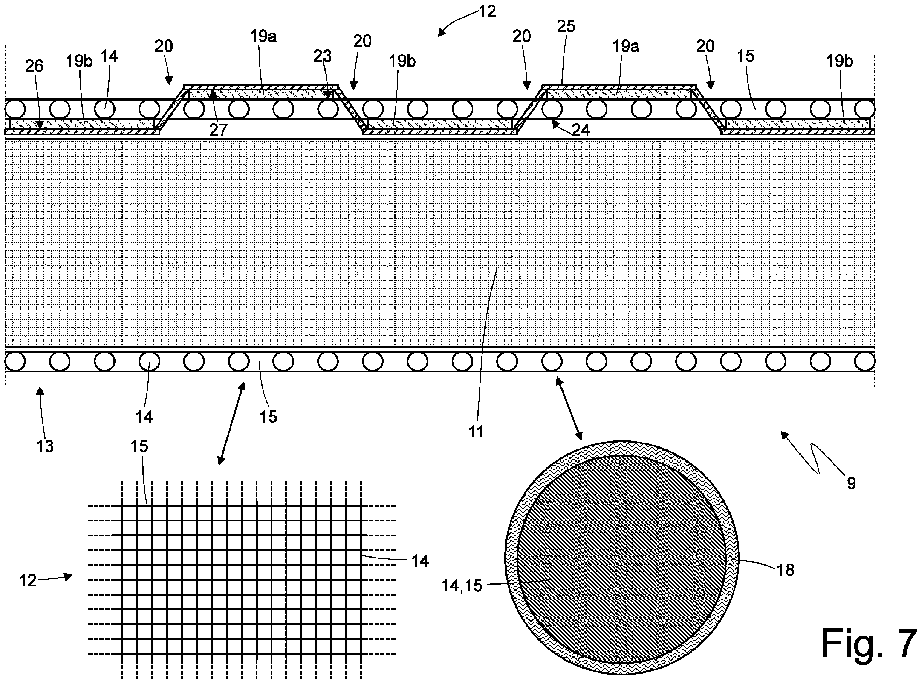

According to a preferred embodiment shown in Figures 6 and 7, each warp wire 14 and each weft wire 15 is provided with an outer insulation 18 made of a material that is electrically insulating and, insofar as possible, heat conducting; according to a preferred embodiment, the outer insulation 18 is made of enamel or paint with a thickness of between 0.0005 mm and 0.08 mm.

According to a preferred embodiment shown in Figure 9, the heating device 17 causes the electric current I to flow through a limited number of the wires 14 and 15 that make up the outer reinforcement mesh 12, i.e., only a limited number of the wires 14 and/or 15 that make up the outer reinforcement mesh 12 are electrified (i.e., electrically connected to an electric voltage generator) in that the electric current I flows through them. Normally, it suffices to only apply the outer insulation 18 to the wires 14 and/or 15 that are to be electrified (i.e., through which the electric current I flows) and therefore to leave the wires 14 and/or 15 that are not electrified (i.e., through which the electric current I does not flow) without the outer insulation 18.

Nonetheless, according to a preferred (but not binding) embodiment, all the wires 14 and 15 are provided with the outer insulation 18 regardless of whether or not they are electrified in order to prevent a non-electrically heated wire 14 and/or 15 from causing a short circuit between electrified wires 14 and/or 15 if the outer insulation 18 on said electrified wires 14 and/or 15 is damaged.

As mentioned previously, the outer reinforcement mesh 12 is made up of a plurality of warp wires 14 (i.e., which make up the warp) and a plurality of weft wires 15 (i.e., which make up the weft) ; the warp wires 14 extend in a linear direction, whereas the weft wires 15 are fed through the shed of the warp wires 14 (i.e., they are interlaced with the warp wires 14) by *"winding"* them around said warp wires 14. According to a preferred (but non-limiting) embodiment, the heating device 17 is designed to cause the electric current I to flow through a group of electrified wires which are normally only the warp wires 14 or only the weft wires 15; in other words, the heating device 17 is only electrically connected to the warp wires 14 or to the weft wires 15. According to a different variant which does not form part of the present invention, the heating device 17 is electrically connected to both the warp wires 14 and to the weft wires 15 to cause the electric current I to flow through warp wires 14 and weft wires 15. Preferably (but not necessarily), the electrified wires are only the warp wires 14, in that the warp wires 14 extend in a more linear manner and the outer insulation 18 is thus subject to less mechanical stress (therefore the outer insulation 18 is less likely to break locally owing to the bends). According to a preferred (but not mandatory) embodiment shown in Figures 8 and 9, all the warp wires 14 are electrified, i.e., the electric current I flows through them all.

According to what is shown in Figures 8 and 9, the heating device 17 comprises a plurality of collectors 19 (i.e., of rectangular plates designed to electrically connect corresponding warp wires 14), each of which is electrically connected to the ends of a group of warp wires 14, in order to connect said warp wires 14 to one another, and is electrically insulated (in particular physically separated) from the adjacent collectors 19. In other words, between one collector 19 and the adjacent collectors 19 there is a space 20 (a break, a hole, or a separation) that determines an electric insulation (i.e., two adjacent collectors 19 do not touch one another due to the space 20 between the two collectors 19 and, therefore, the two collectors 19 are electrically insulated from one another). The collectors 19 determine a parallel/series connection of the warp wires 14: the warp wires 14 are divided into a plurality of groups of warp wires 14; within the same group of warp wires 14 all the warp wires 14 are connected to one another in parallel (as a result of two opposite collectors 19); and the different groups of warp wires 14 are connected to one another in series (as a result of the fact that each collector 19 extends to the warp wires 14 of two adjacent groups, except for the initial collector 19 and the final collector 19). All the groups of warp wires 14 are made up of (about) the same number of warp wires 14, which can generally range from five to fifty.

In other words, each collector 19 is merely a rectangular plate of conductive metal material (for example copper or alternatively aluminium) which electrically connects corresponding warp wires 14 (in the case in which the warp wires 14 are electrified).

Summing up what has been described above, there are two successions of collectors 19 that are arranged at opposite ends of the outer reinforcement mesh 12 and determine an electrical connection, partly in parallel and partly in series, of the warp wires 14 of the outer reinforcement mesh 12.

A power supply device 22 is connected to the ends 21 of the electric circuit consisting of the warp wires 14 connected in parallel/series by the collectors 19 in order to apply a potential difference V that determines the flow of the electric current I. Generally speaking, the power supply device 22 receives electric energy from an electric power bus of the helicopter 1 and is able to control the value of the potential difference V applied at the ends 21 of the electric circuit and thus to control the strength of the electric current I and thus the heat generated in the electrified wires 14 due to the Joule effect (it is important to observe that the potential difference V applied at the ends 21 of the electric circuit may be reduced in intensity and/or in time). Normally, the electric power bus of the helicopter 1 supplies alternating electric voltage at 110 Volts. It is important to observe that the power supply device 22 could also be an ordinary switch (electronically controlled) that is closed to connect the ends 21 of the electric circuit to the electric power bus of the helicopter 1.

According to what is shown in Figures 6, 7, and 8, at each end of the outer reinforcement mesh 12, the collectors 19 are alternatively arranged in contact with a portion 23 of the surface of the warp wires 14 oriented outwards (i.e. oriented in a direction away from the filtering material panel 11) of the warp wires 14 and a portion 24 of the surface of the warp wires 14 oriented inwards (i.e. oriented in the same direction as the filtering material panel 11) of the warp wires 14. In other words, an outer collector 19a is arranged further outwards (further away from the filtering material panel 11) than the outer reinforcement mesh 12 and, therefore, in contact with the portion 23 of the surface of the warp wires 14 oriented in a direction away from the filtering material panel 11, while an adjacent inner collector 19b is arranged further inwards (closer to the filtering material panel 11) than the outer reinforcement mesh 12 and, therefore, in contact with the portion 24 of the surface of the warp wires 14 oriented in the same direction as the filtering material panel 11. As a result, the collectors 19a and 19b are alternatively arranged further outside of the outer reinforcement mesh 12 (i.e. further away from the filtering material panel 11) and further inside the outer reinforcement mesh 12 (i.e. closer to the filtering material panel 11).

According to a preferred embodiment shown in Figures 6, 7, and 8, all the collectors 19a and 19b of the same end of the outer reinforcement mesh 12 are borne by a support element 25 of electrically insulating material (typically plastic); for example, the support element 25 could be made of Kapton^{®} (this is a polyimide film developed by DuPont^{®} and used, among other things, in flexible printed circuits). As a result, the inner collectors 19b are arranged in contact with an outer surface 26 (i.e. oriented outwards and, therefore, in a direction away from the filtering material panel 11) on one side, and in contact with the portions 24 of the surface of the corresponding warp wires 14 on the opposite side. Similarly, the outer collectors 19a are arranged in contact with an inner surface 27 (i.e. oriented inwards and, therefore, in the same direction as the filtering material panel 11) on one side and in contact with the portions 23 of the surface of the corresponding warp wires 14 on the opposite side.

As a result, between an outer collector 19a and an adjacent inner collector 19b, there is not only space 20 but also the support element 25; in other words, the space 20 separating two adjacent collectors 19a and 19b is at least partially filled by the support element 25. Between two adjacent outer collectors 19a and between two adjacent inner collectors 19b there is only some space (i.e. a given distance).

In the embodiment shown in Figure 6, the support element 25 is flat and, therefore, the ends of the warp wires 14 have been deformed to make the desired connections. For example, the ends of the warp wires 14 to be connected to the outer collectors 19a are deformed (plastically and slightly) inwards while the ends of the warp wires 14 to be connected to the inner collectors 19b are deformed (plastically and slightly) outwards; in this way, there is then enough space to easily and quickly insert the collectors 19a and 19b borne by the support element 25 (which remains flat) between the ends of the warp wires 14 in such a way that the outer collectors 19a are resting on the portion 23 of the surface of the corresponding warp wires 14 and so that the inner collectors 19b are resting on the portion 24 of the surface of the corresponding warp wires 14.

In the alternative and equivalent embodiment shown in Figure 7, the ends of the warp wires 14 lie on a plane and, therefore, the support element 25 is deformed to make the desired connections; as a result, the support element 25 takes on the shape of a coil going in and out of the ends of the warp wires 14. In other words, the support element 25 goes in and out of the ends of the warp wires 14 to support the outer collectors 19a at the portion 23 of the surface of the corresponding warp wires 14 and to support the inner collectors 19b at the portion 24 of the surface of the corresponding warp wires 14.

In reality, there is normally an intermediate situation between what is shown in Figure 6 (wherein the support element 25 is flat) and what is shown in Figure 7 (wherein the ends of the warp wires 14 lie on a plane), i.e. both the support element 25 and the ends of the warp wires 14 are deformed to make the desired connections.

The method of connecting the warp wires 14 in parallel/series has two advantages. First, the method for connecting the warp wires 14 in parallel/series makes it possible to obtain an overall electrical resistance at the ends 21 of the electric circuit consisting of the warp wires 14 with a value that is ideal in order to obtain the necessary heating power without the need for an electric current I that is too strong. Furthermore, the method for connecting the warp wires 14 in parallel/series makes it possible to obtain a *"robust"* electric circuit capable of operating properly even in the case of breakage (interruption) of some of the warp wires 14.

As mentioned previously, the wires 14 and 15 are provided with an outer insulation 18 made of an electrically insulating and preferably heat conductive material to prevent the warp wires 14 from being electrically connected to one another by the weft wires 15 with a subsequent reduction (which could even be very significant) of the overall electrical resistance.

According to a preferred (but not mandatory) embodiment, the warp wires 14 that are electrified (i.e., those through which the electric current I flows) are made of a first material that is different from a second material used to make the non-electrified weft wires 15 (i.e., those through which the electric current I does not flow) and has a higher resistivity than the second material. For example, the electrified warp wires 14 may be made of constantan (a binary alloy made of 60% copper and 40% nickel) which, at room temperature, has a resistivity of approximately 4.9 × 10⁻⁷ Ω/m or they may be made of nickel-chrome (a binary alloy containing 80% nickel and 20% chrome) which, at room temperature, has a resistivity of approximately 108 × 10⁻⁷ Ω/m; the non-electrified weft wires 15, on the other hand, may be made of steel which, at room temperature, has a resistivity of approximately 1.1 - 1.8 × 10⁻⁷ Ω/m or of aluminium which, at room temperature, has a resistivity of approximately 2.8 × 10⁻⁷ Ω/m or of copper which, at room temperature, has a resistivity of approximately 1.68 × 10⁻⁷ Ω/m.

The use of a material with a relatively high resistivity for the electrified warp wires 14 makes it possible to obtain an overall electrical resistance at the ends 21 of the electric circuit formed by the warp wires 14 with a value that is ideal for obtaining the necessary heating power without the need for an electric current I that is too high.

Furthermore, the use of a material in which the resistivity varies little when the temperature changes (as in the case of constantan) for the electrified warp wires 14 prevents localised differences in the temperature of the warp wires 14 from determining significant localised differences in the electrical resistance and thus from significantly altering the circulation of the electric current I.

It is important to observe that the overall electrical resistance at the ends 21 of the electric circuit formed by the warp wires 14 must be relatively high (in the region of tens of Ohms) to prevent the voltage difference V applied by the power supply device 22 from being too small and, thus, the electric current I from being too high. Devices 17 capable of generating with good accuracy a potential difference V in the region of a few tens or a few hundreds of Volts while supplying electric currents I that are not too high (in the region of several tens of Amperes at the most) are, in fact, available on the market; heating devices 17 capable of generating a potential difference V in the region of only a few Volts while delivering very high electric currents I (even hundreds of Amperes) are, instead, hard to find (and thus expensive). It is therefore important to make sure that the overall electrical resistance at the ends 21 of the electric circuit formed by the warp wires 14 is high enough to enable the use of a heating device 17 that is readily available on the market; this result is achieved by choosing a material with high electrical resistivity for the electrified warp wires 14 and by choosing the type of connection of the warp wires 14 to the heating device 17; the dimensions (length and section) of the electrified warp wires 14 are, instead, substantially dictated by the size of the air filter 9 and by the mechanical/pneumatic sizing (i.e., by the need to achieve the necessary mechanical strength without excessively penalising the intake air flow).

Furthermore, the overall electrical resistance at the ends 21 of the electric circuit formed by the warp wires 14 must be relatively high (in the region of tens of Ohms) to prevent the intensity of the electric current I from being too high, as a high intensity electric current I requires the use of cables and connection terminals with a large cross-section and which are thus heavy and bulky.

If the available electric power supply is a single-phase system, a single electric circuit is usually (but not necessarily) obtained in the warp wires 14 throughout the entire outer reinforcement mesh 12. If the electric power supply is a three-phase system (as is normally the case with commercial helicopters), three separate electric circuits (i.e., electrically insulated from one another) are formed in the warp wires 14 and may be in connected in a star configuration (in which case the resistance of each single electric circuit is for example approximately 20 Ohms) or they may be connected in a delta configuration (in which case the resistance of each single electric circuit is for example approximately 50 Ohms).

According to a preferred embodiment, the heating device 17 performs feedback control of the potential difference V applied by the power supply device 22 (i.e., the electric current I that flows through the electrified warp wires 14) using the actual temperature of the filtering material panel 11 as the feedback variable and so as to follow a desired temperature of the material panel 11. To perform said feedback control the heating device 17 must determine the actual temperature of the filtering material panel 11 in real-time; according to a possible embodiment, a temperature sensor is coupled to the filtering material panel 11 and may be embedded in the filtering material panel 11 or may rest on the outer or inner surface of the filtering material panel 11. Alternatively, the heating device 17 estimates the actual temperature of the filtering material panel 11 on the basis of the actual temperature of the electrified warp wires 14, i.e., the heating device 17 determines the actual temperature of the electrified warp wires 14 and estimates the actual temperature of the filtering material panel 11 on the basis of the actual temperature of the electrified warp wires 14; for example, the heating device 17 determines the actual electrical resistance of the electrified warp wires 14 through which the electric current I flows and determines the actual temperature of the electrified warp wires 14 on the basis of the actual electrical resistance of the electrified warp wires 14 (using the known existing relationship between the electrical resistivity of a conductor and the corresponding temperature).

The heating device 17 may be activated automatically on the basis of the actual temperature of the filtering material panel 11 or manually by the pilot of the helicopter 1.

According to a preferred embodiment, the heating device 17 (which also comprises, on the inside, all the related control electronics, and thus also the power supply device 22) is integrally fixed to the peripheral frame 6 in such a way that the air filter 9 and the heating device 17 form a single compact unit that can be assembled/disassembled quickly.

A particularly effective and efficient method for manufacturing the electrified outer reinforcement mesh 12, i.e., with the warp wires 14 electrically connected to the power supply device 22 so that, when necessary, the electric current I can flow through them, will now be described.

First, as shown in Figure 9, the outer reinforcement mesh 12 is manufactured by interlacing the warp wires 14 (made for example of constantan and externally provided with the outer insulation 18) with the weft wires 15 (made for example of aluminium and externally provided with the outer insulation 18).

Clearly, the wires 14 and 15 are provided with the outer insulation 18 before being interlaced and using entirely conventional processes (with a low production cost since these are widely used in the sector of electrical windings). The outer reinforcement mesh 12 is made in such a way that the ends of the warp wires 14 are free of the weft wires 15 (in order to be able to couple with the collectors 19a and 19b). In other words, the weft wires are not interlaced in the warp wires at the ends of the warp wires 14 so that the ends of the warp wires 14 are left free (i.e. without the weft wires 15).

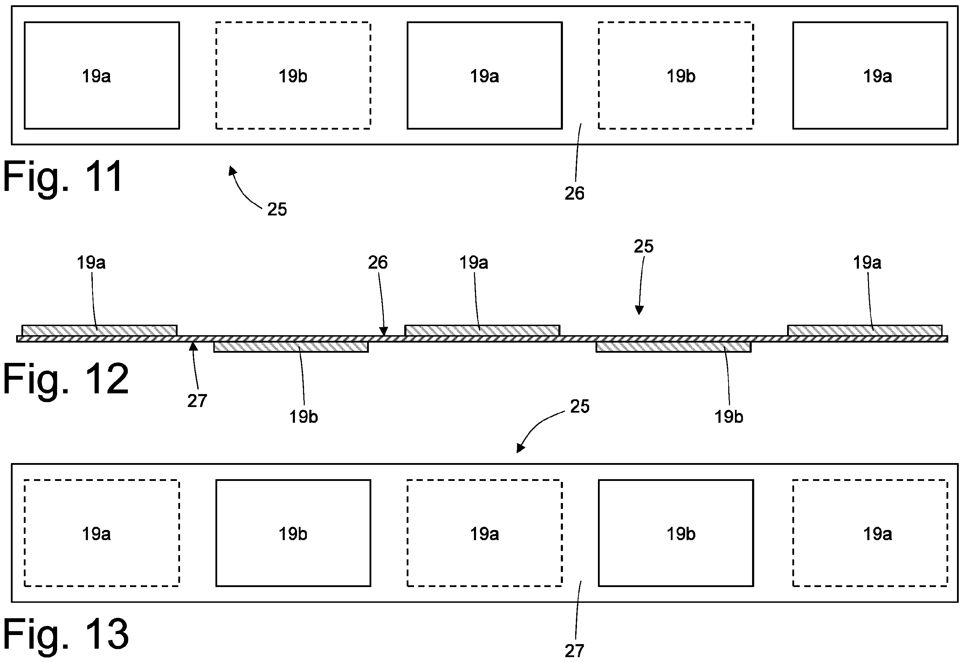

Subsequently and as shown in Figure 8, at the opposite ends of the outer reinforcement mesh 12, and at the ends of the warp wires 14, two support elements 25 provided with collectors 19a and 19b (i.e. two successions of collectors 19a and 19b borne by respective support elements 25) are inserted. A single support element 25 is best shown in Figures 11, 12, and 13, wherein it can be seen that the support element 25 has the outer surface 26 on which the outer collectors 19a are arranged (at a given distance from each other) and the inner surface 27 (opposite the outer surface 26) on which the inner collectors 19b are arranged (at a given distance from each other).

Subsequently, the collectors 19a and 19b (borne by the two support elements 25) are welded to the ends of the corresponding warp wires 14, e.g. by using filler material; in particular, a low-melting filler material (typically tin or tin-based alloy) could be used for the welding, the material being interposed between the ends of the warp wires 14 and the collectors 19a and 19b. According to a second embodiment, the filler material is mixed with flux and the melting temperature of the filler material is higher than the melting temperature of the outer insulation 18. As a consequence, the melted filler material locally melts the outer insulation (the melted outer insulation is discharged by the flux mixed with the filler material) baring the ends of the warp wires 14 and making it possible to obtain a high quality electrical connection between the ends of the warp wires 14 and the collectors 19a and 19b. Alternatively, the ends of the warp wires 14 can be bared beforehand by locally removing the outer insulation 18 (for example by means of a thermal, mechanical, and/or chemical process) before welding the ends of the warp wires 14 and the collectors 19a and 19b.

The welding of the collectors 19a and 19b, at the ends of the corresponding warp wires 14 through the interposition of the filler material, is preferably carried out by arranging the outer reinforcement mesh 12 (provided, of course, with the collectors 19a and 19b and with the filler material) in a furnace that reaches a temperature that is higher than the melting temperature of the filler material. Inside the furnace, the outer reinforcement mesh 12 is preferably subjected to a constant and calibrated pressure (at least at the collectors 19a and 19b) to guarantee good welding results between the collectors 19a and 19b and the ends of the warp wires 14.

According to a preferred embodiment, the collectors 19 are applied to the outer reinforcement mesh 12 before applying any further enamel or paint coating to said outer reinforcement mesh 12. Alternatively, the collectors 19 could also be applied to the outer reinforcement mesh 12 after applying any further enamel or paint coating to said outer reinforcement mesh 12.

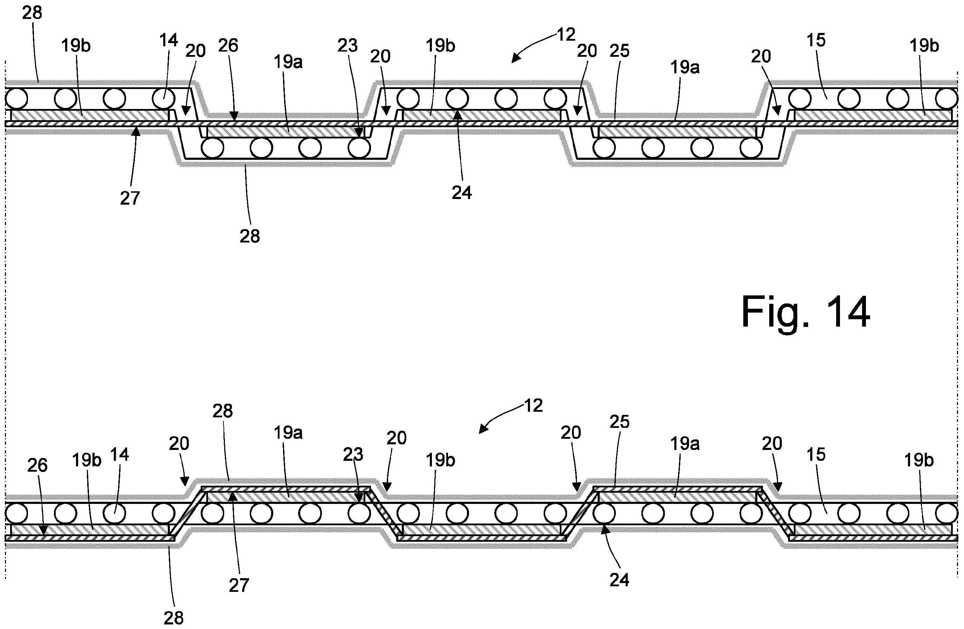

According to a different embodiment shown in Figure 14, two insulating (i.e. electrically insulating) bands 28 are arranged at each succession of collectors 19. The bands enclose the support element 25, the collectors 19, and the ends of the warp wires 14 of the outer reinforcement mesh 12 between them to further reduce the risk of short circuits. In other words, at each succession of collectors 19, the two insulating bands 28 externally cover the support element 25, the collectors 19, and the ends of the warp wires 14 of the outer reinforcement mesh 12. According to a different embodiment not shown, and at each succession of collectors 19, instead of two insulating bands 28 there is only one insulating band 28 that covers the support element 25, the collectors 19, and the ends of the warp wires 14 of the outer reinforcement mesh 12 on one side only.

To sum up, the production of the electrified outer reinforcement mesh 12 involves resting two successions of collectors 19, which are borne by respective support elements 25, at the opposite ends of the outer reinforcement mesh 12 and at the ends of the warp wires 14.

In the embodiments described above, the warp wires 14 of the outer reinforcement mesh 12 are electrified (i.e., the electric current I can flow through them), they are made of a first metal material, preferably constantan, and are externally coated with an outer insulation 18 made of an electrically insulating material (alternatively, the weft wires 15 could be electrified instead of the warp wires 14).

The weft wires 15, instead, are not electrified (i.e., the electric current I cannot flow through them), they are made of a second metal material, preferably steel, aluminium or copper, that is different to the first metal material, and are also externally coated with an outer insulation 18 made of an electrically insulating material.

According to an alternative embodiment, the warp wires 14 of the outer reinforcement mesh 12 are electrified (i.e., the electric current I can flow through them), they are made of a first metal material, preferably constantan, and are externally coated with an outer insulation 18 made of an electrically insulating material (also in this case, the weft wires 15 could, alternatively, be electrified instead of the warp wires 14). The weft wires 15, in contrast, are not electrified (i.e., the electric current I cannot flow through them). Some are made of a plastic material that is not electrically conductive and the rest are made of a second metal material, preferably copper that is different from the first metal material. They are also externally coated with an outer insulation 18 made of an electrically insulating material.

Preferably, the weft wires 15 made of the plastic material alternate with the weft wires 15 made of the second metal material (and externally coated with an outer insulation 18 made of an electrically insulating material). Furthermore, the weft wires 15 made of the plastic material are, preferably, more numerous than the weft wires 15 made of the second metal material (for example with a ratio of 3-8 to 1) .

According to a further embodiment that is not illustrated, the warp wires 14 of the outer reinforcement mesh 12 are electrified (i.e., the electric current can flow through them), they are made of a metal material, preferably constantan, and are externally coated with an outer insulation 18 made of an electrically insulating material (also in this case, the weft wires 15 could alternatively be electrified instead of the warp wires 14). The weft wires 15, instead, are not electrified (i.e., the electric current I cannot flow through them) and are all made of a plastic material that is not electrically conductive.

Clearly, the ideal situation from an electrical perspective (i.e., in terms of the electrical insulation) is that the non-electrified weft wires 15 are all made of a plastic material that is not electrically conductive; however, this situation is not so ideal from a mechanical perspective (i.e., in terms of the mechanical strength of the outer mesh 12). Therefore, it is useful to have some weft wires 15 that are made of a metal material (preferably copper since this is more ductile than steel and more resistant to fatigue than steel at low temperatures, i.e., at temperatures of around zero degrees centigrade) between the wires 15 made of the plastic material. Clearly, the weft wires 15 made of metal material should preferably be externally coated with an outer insulation 18 made of an electrically insulating material.

In the embodiment shown in the accompanying figures, the air filter 9 comprises the outer reinforcement mesh 12 and the inner reinforcement mesh 13. According to alternative embodiments that are not shown, the air filter 9 could comprise the outer reinforcement mesh 12 only, the inner reinforcement mesh 13 only, a central reinforcement mesh only (embedded in the filtering material panel 11), or the central reinforcement mesh in addition to the reinforcement meshes 12 and 13. Preferably only the central reinforcement mesh is electrified (if present, of course) or only the outer reinforcement mesh 12 (if there is no central reinforcement mesh). Generally speaking, electrifying the inner reinforcement mesh 13 is not advisable, as the inner reinforcement mesh 13 could only heat the filtering material panel 11 directly by heat conduction and not indirectly by means of the intake air (which only passes through the inner reinforcement mesh 13 after passing through the filtering material panel 11).

In the embodiment shown in the accompanying figures, the air filter 9 has a flat, practically rectangular shape (and as a consequence the filtering panel 11 also has the same shape), but the air filter 9 (and thus the filtering panel 11) could clearly be of any other shape to adapt to the shape of the air intake. By way of example, the air filter 9 (and thus the filtering panel 11) could have a flat circular or elliptical shape, a cylindrical shape, a cone shape, or a truncated-cone shape, etc.

The embodiment shown by way of example in the accompanying figures refers to a helicopter 1, but the present invention may also be advantageously used in any type of aircraft or other vehicle, including road vehicles provided with an engine that must suck in air from the outside in order to operate (for example an off-road or all-terrain vehicle required to operate in extremely cold regions).

The electrically heated air filter 9 described above has numerous advantages.

First of all, the electrically heated air filter 9 described above makes it possible to supply electricity to the warp wires 14 (or, alternatively, to the weft wires 15) of the outer reinforcement mesh 12 in a simple and effective way.

In addition, in the electrically heated air filter 9 described above, the possibility that the wave bending of the unit, consisting of the filtering material panel 11 enclosed between the outer reinforcement mesh 12 and the inner reinforcement mesh 13, leads to the formation of short circuits between adjacent collectors 19 is substantially reduced.

Finally, the electrically heated air filter 9 described above can be produced quickly and easily with substantially standard (i.e. easily available commercially), low cost equipment.

### LIST OF REFERENCE NUMBERS OF THE FIGURES

- 1: helicopter
- 2: engine
- 3: tubular housing
- 4: main air intake
- 5: outlet opening
- 6: metal grid
- 7: air box
- 8: intake system
- 9: air filter
- 10: perimeter frame
- 11: filtering material panel
- 12: outer reinforcement mesh
- 13: inner reinforcement mesh
- 14: warp wires
- 15: weft wires
- 16: stiffening mesh
- 17: heating device
- 18: outer insulation
- 19: collectors
- 20: space
- 21: ends
- 22: power supply device
- 23: portion of the surface
- 24: portion of the surface
- 25: support element
- 26: outer surface
- 27: inner surface
- 28: insulating strip
- I: electric current
- V: electric voltage

## Claims

1. An electrically heated air filter (9) for an intake system (8) of an engine (2) of a vehicle (1); the air filter (9) comprises:
an outer reinforcement mesh (12), which is made up of a plurality of weft wires (15) and a plurality of warp wires (14) interlaced with one another;
an inner reinforcement mesh (13), which is made up of a plurality of weft wires (15) and a plurality of warp wires (14) interlaced with one another;
a filtering material panel (11), which is enclosed between the outer reinforcement mesh (12) and the inner reinforcement mesh (13) and is bent in waves;
two successions of collectors (19), which are arranged at opposite ends of the outer reinforcement mesh (12) and determine an electrical connection, which is partly in parallel and partly in series, of respective wires which are alternatively the warp wires (14) or the weft wires (15) of the outer reinforcement mesh (12); and
a heating device (17), which, also using the collectors (19), is designed to cause an electric current (I) to flow through part of the outer reinforcement mesh (12), so as to generate heat, due to the Joule effect, on the inside of the outer reinforcement mesh (12);
wherein, in each succession of collectors (19), the collectors (19) are electrically insulated from one another and rest against the respective wires (14; 15) of the outer reinforcement mesh (12) so as to be electrically connected to the respective wires (14; 15) of the outer reinforcement mesh (12);
the air filter (9) is **characterized in that,** in each succession of collectors (19), the collectors (19) alternately rest against a first portion (23) of a surface of the respective wires (14; 15) of the outer reinforcement mesh (12) oriented in a direction away from the filtering material panel (11) and against a second portion (24) of the surface of the respective wires (14; 15) of the outer reinforcement mesh (12) oriented towards the filtering material panel (11).

2. An air filter (9) according to claim 1, wherein each succession of collectors (19) has an alternation of outer collectors (19a), which rest against the first portion (23) of the surface of the respective wires (14; 15) of the outer reinforcement mesh (12), and inner collectors (19b), which rest against the second portion (24) of the surface of the respective wires (14; 15) of the outer reinforcement mesh (12) .

3. An air filter (9) according to claim 1 or 2, wherein, in each succession of collectors (19), all the collectors (19) are supported by a same common support element (25) having an inner surface (27), on which there are fixed outer collectors (19a) resting against the first portion (23) of the surface of the respective wires (14; 15) of the outer reinforcement mesh (12), and an outer surface (26), on which there are fixed inner collectors (19b) resting against the second portion (24) of the surface of the respective wires (14; 15) of the outer reinforcement mesh (12).

4. An air filter (9) according to claim 3, wherein each support element (25) is made of an electrically insulating and flexible material.

5. An air filter (9) according to claim 3 or 4, wherein, in each succession of collectors (19), each outer collector (19a) is electrically insulated from an adjacent inner collector (19b) including by the interposition of the corresponding support element (25).

6. An air filter (9) according to claim 3, 4 or 5, wherein each support element (25) has the shape of a coil going in and out of the ends of the respective wires (14; 15) of the outer reinforcement mesh (12) so as to cause outer collectors (19a) to rest against the first portion (23) of the surface of the respective wires (14; 15) of the outer reinforcement mesh (12) and inner collectors (19b) to rest against the second portion (24) of the surface of the respective wires (14; 15) of the outer reinforcement mesh (12) .

7. An air filter (9) according to one of the claims from 1 to 6, wherein, in each succession of collectors (19), the ends of the respective wires (14; 15) of the outer reinforcement mesh (12) are alternatively deformed inwards so as to be connected to outer collectors (19a) resting against the first portion (23) of the surface of the respective wires (14; 15) of the outer reinforcement mesh (12), and outwards so as to be connected to inner collectors (19b) resting against the second portion (24) of the surface of the respective wires (14; 15) of the outer reinforcement mesh (12).

8. An air filter (9) according to one of the claims from 1 to 7, wherein, in each succession of collectors (19), each collector (19) is electrically insulated from an adjacent collector (19), since it is arranged at a given distance - other than zero - from the adjacent collector (19) .

9. An air filter (9) according to one of the claims from 1 to 8, wherein each collector (19) is a rectangular plate made of an electrically conductive material, which electrically connects the ends of a corresponding part of the respective wires (14; 15) of the outer reinforcement mesh (12) to one another.

10. An air filter (9) according to one of the claims from 1 to 9, wherein, in each succession of collectors (19), there is at least one insulating band (28), which covers the collectors (19) and the ends of the respective wires (14; 15) of the outer reinforcement mesh (12).

11. An air filter (9) according to one of the claims from 1 to 10, wherein, in each succession of collectors (19), there are two insulating bands (18), which enclose between them the collectors (19) and the ends of the respective wires (14; 15) of the outer reinforcement mesh (12).

12. A method for manufacturing an electrically heated air filter (9) for an intake system (8) of an engine (2) of a vehicle (1); the manufacturing method comprises the steps of:
manufacturing an outer reinforcement mesh (12), which is made up of a plurality of weft wires (15) and a plurality of warp wires (14) interlaced with one another;
manufacturing an inner reinforcement mesh (13), which is made up of a plurality of weft wires (15) and a plurality of warp wires (14) interlaced with one another;
manufacturing a filtering material panel (11);
placing the reinforcement meshes (12, 13) on opposite surfaces of the filtering material panel (11), so as to form a unit;
bending in waves the unit consisting of the filtering material panel (11) enclosed between the reinforcement meshes (12, 13);
placing two successions of collectors (19) at opposite ends of the outer reinforcement mesh (12) so as to determine a connection, which is partly in parallel and partly in series, of respective wires which are alternatively the warp wires (14) or the weft wires (15) of the outer reinforcement mesh (12); and
installing a heating device (17), which, also using the collectors (19), is designed to cause an electric current I to flow through part of the outer reinforcement mesh (12), so as to generate heat, due to the Joule effect, on the inside of the outer reinforcement mesh (12);
wherein, in each succession of collectors (19), the collectors (19) are electrically insulated from one another and rest against the respective wires (14; 15) of the outer reinforcement mesh (12) so as to be electrically connected to the respective wires (14; 15) of the outer reinforcement mesh (12);
the manufacturing method **is characterized in** comprising the further step of resting, in each succession of collectors (19), the collectors (19) alternately against a first portion (23) of a surface of the respective wires (14; 15) of the outer reinforcement mesh (12) oriented in a direction away from the filtering material panel (11) and against a second portion (24) of the surface of the respective wires (14; 15) of the outer reinforcement mesh (12) oriented towards the filtering material panel (11).

13. A vehicle (1) provided with:
an engine (2);
at least one air intake (4) through which the engine (2) takes in the external air needed to operate; and
an air filter (9) according to one of the claims from 1 to 11 and which is arranged downstream of the air intake (4) .

## Patentansprüche

1. Ein elektrisch beheizter Luftfilter (9) für ein Einlasssystem (8) eines Motors (2) eines Fahrzeugs (1); wobei der Luftfilter (9) Folgendes umfasst:
ein äußeres Verstärkungsgeflecht (12), das aus einer Vielzahl von Schussdrähten (15) und einer Vielzahl von Kettdrähten (14) besteht, die miteinander verflochten sind;
ein inneres Verstärkungsgeflecht (13), das aus einer Vielzahl von Schussdrähten (15) und einer Vielzahl von Kettdrähten (14) besteht, die miteinander verflochten sind;
eine Filtermaterialplatte (11), die zwischen dem äußeren Verstärkungsgeflecht (12) und dem inneren Verstärkungsgeflecht (13) eingeschlossen ist und in Wellen gebogen ist,
zwei Abfolgen von Kollektoren (19), die an gegenüberliegenden Enden des äußeren Verstärkungsgeflechts (12) angeordnet sind und eine teils parallele, teils serielle elektrische Verbindung der jeweiligen Drähte bestimmen, die abwechselnd die Kettdrähte (14) oder die Schussdrähte (15) des äußeren Verstärkungsgeflechts (12) sind, und
eine Heizvorrichtung (17), die, ebenfalls unter Verwendung der Kollektoren (19), dafür ausgelegt ist, einen elektrischen Strom (I) durch einen Teil des äußeren Verstärkungsgeflechts (12) fließen zu lassen, um so aufgrund des Joule-Effekts Wärme auf der Innenseite des äußeren Verstärkungsgeflechts (12) zu erzeugen;
wobei in jeder Abfolge von Kollektoren (19) die Kollektoren (19) elektrisch voneinander isoliert sind und an den jeweiligen Drähten (14; 15) des äußeren Verstärkungsgeflechts (12) anliegen, sodass sie mit den jeweiligen Drähten (14; 15) des äußeren Verstärkungsgeflechts (12) elektrisch verbunden sind;
wobei der Luftfilter (9) **dadurch gekennzeichnet ist, dass** in jeder Abfolge von Kollektoren (19) die Kollektoren (19) abwechselnd an einem ersten Abschnitt (23) einer Oberfläche der jeweiligen Drähte (14; 15) des äußeren Verstärkungsgeflechts (12) anliegen, die in einer Richtung weg von der Filtermaterialplatte (11) ausgerichtet sind, und an einem zweiten Abschnitt (24) der Oberfläche der jeweiligen Drähte (14; 15) des äußeren Verstärkungsgeflechts (12) anliegen, die zu der Filtermaterialplatte (11) hin ausgerichtet sind.

2. Der Luftfilter (9) nach Anspruch 1, wobei jede Abfolge von Kollektoren (19) eine Wechselfolge aufweist von äußeren Kollektoren (19a), die am ersten Abschnitt (23) der Oberfläche der jeweiligen Drähte (14; 15) des äußeren Verstärkungsgeflechts (12) anliegen, und inneren Kollektoren (19b), die am zweiten Abschnitt (24) der Oberfläche der jeweiligen Drähte (14; 15) des äußeren Verstärkungsgeflechts (12) anliegen.

3. Der Luftfilter (9) nach Anspruch 1 oder 2, wobei in jeder Abfolge von Kollektoren (19) alle Kollektoren (19) von einem selben gemeinsamen Stützelement (25) getragen werden, das Folgendes aufweist: eine Innenfläche (27), auf der sich feststehende äußere Kollektoren (19a) befinden, die am ersten Abschnitt (23) der Oberfläche der jeweiligen Drähte (14; 15) des äußeren Verstärkungsgeflechts (12) anliegen, und eine Außenfläche (26), auf der sich feststehende innere Kollektoren (19b) befinden, die am zweiten Abschnitt (24) der Oberfläche der jeweiligen Drähte (14; 15) des äußeren Verstärkungsgeflechts (12) anliegen.

4. Der Luftfilter (9) nach Anspruch 3, wobei jedes Stützelement (25) aus einem elektrisch isolierenden und flexiblen Material hergestellt ist.

5. Der Luftfilter (9) nach Anspruch 3 oder 4, wobei in jeder Abfolge von Kollektoren (19) jeder äußere Kollektor (19a) elektrisch isoliert ist von einem benachbarten inneren Kollektor (19b), was die Zwischensetzung des entsprechenden Stützelements (25) beinhaltet.

6. Der Luftfilter (9) nach Anspruch 3, 4 oder 5, wobei jedes Stützelement (25) die Form einer Spule hat, die in die Enden der jeweiligen Drähte (14; 15) des äußeren Verstärkungsgeflechts (12) hinein und aus ihnen heraus geht, um zu bewirken, dass die äußeren Kollektoren (19a) am ersten Abschnitt (23) der Oberfläche der jeweiligen Drähte (14; 15) des äußeren Verstärkungsgeflechts (12), und innere Kollektoren (19b) am zweiten Abschnitt (24) der Oberfläche der jeweiligen Drähte (14; 15) des äußeren Verstärkungsgeflechts (12) anliegen.

7. Der Luftfilter (9) nach irgendeinem der Ansprüche von 1 bis 6, wobei in jeder Abfolge von Kollektoren (19) die Enden der jeweiligen Drähte (14; 15) des äußeren Verstärkungsgeflechts (12) abwechselnd nach innen verformt sind, um mit äußeren Kollektoren (19a) verbunden zu werden, die am ersten Abschnitt (23) der Oberfläche der jeweiligen Drähte (14; 15) des äußeren Verstärkungsgeflechts (12) anliegen, und nach außen verformt werden, um mit inneren Kollektoren (19b) verbunden zu werden, die am zweiten Abschnitt (24) der Oberfläche der jeweiligen Drähte (14; 15) des äußeren Verstärkungsgeflechts (12) anliegen.

8. Der Luftfilter (9) nach irgendeinem der Ansprüche von 1 bis 7, wobei in jeder Abfolge von Kollektoren (19) jeder Kollektor (19) elektrisch von einem benachbarten Kollektor (19) isoliert ist, da er in einem bestimmten Abstand - der ungleich Null ist - zum benachbarten Kollektor (19) angeordnet ist.

9. Der Luftfilter (9) nach irgendeinem der Ansprüche von 1 bis 8, wobei jeder Kollektor (19) eine rechteckige Platte aus einem elektrisch leitfähigen Material ist, die die Enden eines entsprechenden Teils der jeweiligen Drähte (14; 15) des äußeren Verstärkungsgeflechts (12) elektrisch miteinander verbindet.

10. Der Luftfilter (9) nach irgendeinem der Ansprüche von 1 bis 9, wobei in jeder Abfolge von Kollektoren (19) mindestens ein Isolierband (28) vorhanden ist, das die Kollektoren (19) und die Enden der jeweiligen Drähte (14; 15) des äußeren Verstärkungsgeflechts (12) abdeckt.

11. Der Luftfilter (9) nach irgendeinem der Ansprüche von 1 bis 10, wobei in jeder Abfolge von Kollektoren (19) zwei Isolierbänder (18) vorhanden sind, die zwischen sich die Kollektoren (19) und die Enden der jeweiligen Drähte (14; 15) des äußeren Verstärkungsgeflechts (12) einschließen.

12. Ein Verfahren zur Herstellung eines elektrisch beheizten Luftfilters (9) für ein Einlasssystem (8) eines Motors (2) eines Fahrzeugs (1); wobei das Verfahren die folgenden Schritte umfasst:
Herstellen eines äußeren Verstärkungsgeflechts (12), das aus einer Vielzahl von Schussdrähten (15) und einer Vielzahl von Kettdrähten (14) besteht, die miteinander verflochten sind;
Herstellen eines inneren Verstärkungsgeflechts (13), die aus einer Vielzahl von Schussdrähten (15) und einer Vielzahl von Kettdrähten (14) besteht, die miteinander verflochten sind;
Herstellen einer Filtermaterialplatte (11),
Anbringen der Verstärkungsgeflechte (12, 13) auf gegenüberliegenden Oberflächen der Filtermaterialplatte (11), um eine Einheit zu bilden;
in Wellen Biegen der Einheit, die aus der zwischen den Verstärkungsgeflechten (12, 13) eingeschlossenen Filtermaterialplatte (11) besteht,
Anbringen von zwei Abfolgen von Kollektoren (19) an gegenüberliegenden Enden des äußeren Verstärkungsgeflechts (12), sodass eine teilweise parallele und teilweise serielle Verbindung der jeweiligen Drähte hergestellt wird, die abwechselnd die Kettdrähte (14) oder die Schussdrähte (15) des äußeren Verstärkungsgeflechts (12) sind; und
Installieren einer Heizvorrichtung (17), die, ebenfalls unter Verwendung der Kollektoren (19), dafür ausgelegt ist, einen elektrischen Strom I durch einen Teil des äußeren Verstärkungsgeflechts (12) fließen zu lassen, um so aufgrund des Joule-Effekts Wärme auf der Innenseite des äußeren Verstärkungsgeflechts (12) zu erzeugen;
wobei in jeder Abfolge von Kollektoren (19) die Kollektoren (19) voneinander elektrisch isoliert sind und an den jeweiligen Drähten (14; 15) des äußeren Verstärkungsgeflechts (12) anliegen, sodass sie mit den jeweiligen Drähten (14; 15) des äußeren Verstärkungsgeflechts (12) elektrisch verbunden sind;
wobei das Herstellungsverfahren **dadurch gekennzeichnet ist, dass** es den weiteren Schritt umfasst, der darin besteht, dass die Kollektoren (19), in jeder Abfolge von Kollektoren (19), abwechselnd an einem ersten Abschnitt (23) einer Oberfläche der jeweiligen Drähte (14; 15) des äußeren Verstärkungsgeflechts (12), die in einer Richtung weg von der Filtermaterialplatte (11) ausgerichtet sind, und an einem zweiten Abschnitt (24) der Oberfläche der jeweiligen Drähte (14; 15) des äußeren Verstärkungsgeflechts (12), die zu der Filtermaterialplatte (11) hin ausgerichtet sind, anliegen.

13. Ein Fahrzeug (1), versehen mit:
einem Motor (2);
mindestens einem Lufteinlass (4), durch den der Motor (2) die zum Betrieb benötigte Außenluft aufnimmt; und
einem Luftfilter (9) nach irgendeinem der Ansprüche von 1 bis 11, der stromabwärts des Lufteinlasses (4) angeordnet ist.

## Revendications

1. Filtre à air (9) chauffé électriquement pour un système d'admission (8) d'un moteur (2) d'un véhicule (1) ; le filtre à air (9) comprend :
une maille de renfort (12) extérieure, qui est constituée d'une pluralité de fils (15) de trame et d'une pluralité de fils (14) de chaîne entrelacés les uns avec les autres ;
une maille de renfort (13) intérieure, qui est constituée d'une pluralité de fils (15) de trame et d'une pluralité de fils (14) de chaîne entrelacés les uns avec les autres ;
un panneau en matériau filtrant (11), qui est entouré par la maille de renfort (12) extérieure et la maille de renfort (13) intérieure et est courbé de manière ondulée ;
deux successions de collecteurs (19), qui sont agencés à des extrémités opposées de la maille de renfort (12) extérieure et déterminent une connexion électrique, qui est en partie en parallèle et en partie en série, de fils respectifs qui sont alternativement les fils (14) de chaîne ou les fils (15) de trame de la maille de renfort (12) extérieure ; et
un dispositif de chauffage (17), qui, également à l'aide des collecteurs (19), est conçu pour amener un courant électrique (I) à circuler à travers une partie de la maille de renfort (12) extérieure, de façon à générer de la chaleur, en raison de l'effet Joule, sur l'intérieur de la maille de renfort (12) extérieure ;
dans lequel, dans chaque succession de collecteurs (19), les collecteurs (19) sont isolés électriquement les uns des autres et reposent contre les fils (14 ; 15) respectifs de la maille de renfort (12) extérieure de façon à être connectés électriquement aux fils (14 ; 15) respectifs de la maille de renfort (12) extérieure ;
le filtre à air (9) est **caractérisé en ce que**, dans chaque succession de collecteurs (19), les collecteurs (19) reposent alternativement contre une première portion (23) d'une surface des fils (14 ; 15) respectifs de la maille de renfort (12) extérieure orientée dans une direction éloignée du panneau en matériau filtrant (11) et contre une seconde portion (24) de la surface des fils (14 ; 15) respectifs de la maille de renfort (12) extérieure orientée vers le panneau en matériau filtrant (11).

2. Filtre à air (9) selon la revendication 1, dans lequel chaque succession de collecteurs (19) a une alternance de collecteurs extérieurs (19a), qui reposent contre la première portion (23) de la surface des fils (14 ; 15) respectifs de la maille de renfort (12) extérieure, et de collecteurs intérieurs (19b), qui reposent contre la seconde portion (24) de la surface des fils (14 ; 15) respectifs de la maille de renfort (12) extérieure.

3. Filtre à air (9) selon la revendication 1 ou 2, dans lequel, dans chaque succession de collecteurs (19), tous les collecteurs (19) sont supportés par un même élément de support (25) commun ayant une surface intérieure (27), sur laquelle sont fixés des collecteurs extérieurs (19a) reposant contre la première portion (23) de la surface des fils (14 ; 15) respectifs de la maille de renfort (12) extérieure, et une surface extérieure (26), sur laquelle sont fixés des collecteurs intérieurs (19b) reposant contre la seconde portion (24) de la surface des fils (14 ; 15) respectifs de la maille de renfort (12) extérieure.

4. Filtre à air (9) selon la revendication 3, dans lequel chaque élément de support (25) est fait d'un matériau électriquement isolant et flexible.

5. Filtre à air (9) selon la revendication 3 ou 4, dans lequel, dans chaque succession de collecteurs (19), chaque collecteur extérieur (19a) est isolé électriquement d'un collecteur intérieur (19b) adjacent y compris par l'interposition de l'élément de support (25) correspondant.

6. Filtre à air (9) selon la revendication 3, 4 ou 5, dans lequel chaque élément de support (25) a la forme d'une bobine entrant et sortant des extrémités des fils (14 ; 15) respectifs de la maille de renfort (12) extérieure de façon à amener des collecteurs extérieurs (19a) à reposer contre la première portion (23) de la surface des fils (14 ; 15) respectifs de la maille de renfort (12) extérieure et des collecteurs intérieurs (19b) à reposer contre la seconde portion (24) de la surface des fils (14 ; 15) respectifs de la maille de renfort (12) extérieure.

7. Filtre à air (9) selon l'une des revendications 1 à 6, dans lequel, dans chaque succession de collecteurs (19), les extrémités des fils (14 ; 15) respectifs de la maille de renfort (12) extérieure sont déformées alternativement vers l'intérieur de façon à être connectées à des collecteurs extérieurs (19a) reposant contre la première portion (23) de la surface des fils (14 ; 15) respectifs de la maille de renfort (12) extérieure, et vers l'extérieur de façon à être connectées à des collecteurs intérieurs (19b) reposant contre la seconde portion (24) de la surface des fils (14 ; 15) respectifs de la maille de renfort (12) extérieure.

8. Filtre à air (9) selon l'une des revendications 1 à 7, dans lequel, dans chaque succession de collecteurs (19), chaque collecteur (19) est isolé électriquement d'un collecteur (19) adjacent, puisqu'il est agencé à une distance donnée - autre que nulle - du collecteur (19) adjacent.

9. Filtre à air (9) selon l'une des revendications 1 à 8, dans lequel chaque collecteur (19) est une plaque rectangulaire faite d'un matériau électroconducteur, qui connecte électriquement les extrémités d'une partie correspondante des fils (14 ; 15) respectifs de la maille de renfort (12) extérieure les unes aux autres.

10. Filtre à air (9) selon l'une des revendications 1 à 9, dans lequel, dans chaque succession de collecteurs (19), il y a au moins une bande isolante (28), qui couvre les collecteurs (19) et les extrémités des fils (14 ; 15) respectifs de la maille de renfort (12) extérieure.

11. Filtre à air (9) selon l'une des revendications 1 à 10, dans lequel, dans chaque succession de collecteurs (19), il y a deux bandes isolantes (18), qui entourent les collecteurs (19) et les extrémités des fils (14 ; 15) respectifs de la maille de renfort (12) extérieure.

12. Méthode de fabrication d'un filtre à air (9) chauffé électriquement pour un système d'admission (8) d'un moteur (2) d'un véhicule (1) ; la méthode de fabrication comprend les étapes consistant à :
fabriquer une maille de renfort (12) extérieure, qui est constituée d'une pluralité de fils (15) de trame et d'une pluralité de fils (14) de chaîne entrelacés les uns avec les autres ;
fabriquer une maille de renfort (13) intérieure, qui est constituée d'une pluralité de fils (15) de trame et d'une pluralité de fils (14) de chaîne entrelacés les uns avec les autres ;
fabriquer un panneau en matériau filtrant (11) ;
placer les mailles de renfort (12, 13) sur des surfaces opposées du panneau en matériau filtrant (11), de façon à former une unité ;
courber de manière ondulée l'unité consistant en le panneau en matériau filtrant (11) entouré par les mailles de renfort (12, 13) ;
placer deux successions de collecteurs (19) à des extrémités opposées de la maille de renfort (12) extérieure de façon à déterminer une connexion, qui est en partie en parallèle et en partie en série, de fils respectifs qui sont alternativement les fils (14) de chaîne ou les fils (15) de trame de la maille de renfort (12) extérieure ; et
installer un dispositif de chauffage (17), qui, également à l'aide des collecteurs (19), est conçu pour amener un courant électrique I à circuler à travers une partie de la maille de renfort (12) extérieure, de façon à générer de la chaleur, en raison de l'effet Joule, sur l'intérieur de la maille de renfort (12) extérieure ;
dans laquelle, dans chaque succession de collecteurs (19), les collecteurs (19) sont isolés électriquement les uns des autres et reposent contre les fils (14 ; 15) respectifs de la maille de renfort (12) extérieure de façon à être connectés électriquement aux fils (14 ; 15) respectifs de la maille de renfort (12) extérieure ;
la méthode de fabrication est **caractérisée en ce qu'**elle comprend l'étape supplémentaire consistant à faire reposer, dans chaque succession de collecteurs (19), les collecteurs (19) alternativement contre une première portion (23) d'une surface des fils (14 ; 15) respectifs de la maille de renfort (12) extérieure orientée dans une direction éloignée du panneau en matériau filtrant (11) et contre une seconde portion (24) de la surface des fils (14 ; 15) respectifs de la maille de renfort (12) extérieure orientée vers le panneau en matériau filtrant (11).

13. Véhicule (1) pourvu de :
un moteur (2) ;
au moins une entrée d'air (4) à travers laquelle le moteur (2) absorbe l'air externe nécessaire pour qu'il fonctionne ; et
un filtre à air (9) selon l'une des revendications 1 à 11 et qui est agencé en aval de l'entrée d'air (4).
